**Europäisches Patentamt**

**European Patent Office**

**Office européen des brevets**

(19)

(11) **EP 1 434 445 A2**

(12) **EUROPEAN PATENT APPLICATION**

(43) Date of publication:
**30.06.2004 Bulletin 2004/27**

(51) Int Cl.⁷: **H04N 9/64**

(21) Application number: **03026813.0**

(22) Date of filing: **20.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.12.2002 KR 2002081641**

(71) Applicant: **SAMSUNG ELECTRONICS CO., LTD.**
**Suwon-City, Kyungki-do (KR)**

(72) Inventor: **Kim, Moon-cheol**
**Giheung-eup Yongin-city Gyunggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Color signal correction device and method, and image processing system using the same and method thereof**

(57) A color signal correction device includes a saturation gain calculation unit to calculate saturation gain for incoming luminance_color difference signals, a luminance gain calculation unit to calculate luminance gain for the luminance_color difference signals, a hue calculation unit to calculate hue for the luminance_color difference signals, a hue gain calculation unit to calculate hue gain by reflecting a user adjustable hue adjust value to the hue calculated by the hue calculation unit, a correction gain calculation unit to calculate correction gain of the luminance_color difference signals to be corrected by combining the calculated saturation gain, luminance gain, and hue gain, and a color signal correction unit to correct the luminance_color difference signals based on the correction gain calculated by the correction gain calculation unit. Accordingly, the present color signal correction device reflects the hue adjust value that is adjusted by a user, thus reproducing the user desired color image on a display.

# FIG. 1

**Description**

BACKGROUND OF THE INVENTION

1. Field of the Invention

The present invention generally relates to a color correction device and a method for an incoming image signal, and more particularly to a color correction device and a method in which the color image that is desired by a user may be reproduced by adjusting a hue using a user adjustable gain and adjusting a saturation of the image signal.

2. Description of the Related Art

In general, people have different color recognition techniques. Since color recognition by each individual results from the differences between a manner of thinking, a surrounding environment, a growth process, and the like, of the individual, it is difficult to compensate for a color signal to allow all people to be satisfied in processing the color signal. Accordingly, there is a need to reproduce the user-desired color image by adjusting a hue using a gain that is optionally adjustable by a user for every color to correct the color signal.

SUMMARY OF THE INVENTION

Therefore, the present invention is designed to meet the needs described above.

It is an aspect of the present invention to provide a color correction device and a method to allow a user to adjust the gain for each hue selected and reproduce a user-desired color image by adjusting the gain for each selected hue using the adjusted gain from the user and correcting the color image.

It is another aspect of the present invention to provide an image signal processing system and method to reproduce a user-desired color image conveniently for an incoming image signal using the color correction apparatus.

To accomplish the above and/or other aspects, the image signal processing system according to an embodiment of the present invention comprises an OSG provision unit to provide a display with the information in the form of characters and/or graphics, an OSD controlling unit to supply a level for each hue of the image signal to the display through the OSG provision unit and receive the hue adjust value by the user for the image signal, and a color signal correction unit to adjust the hue using the hue adjust value received through the OSD controlling unit to correct the color signal of an inputted image signal. Here, the color signal correction unit calculates the information on saturation, luminance and hue from the image signal, and corrects the color signal by combining the received hue adjust value with the calculated information.

On the other hand, the image signal processing method according to an embodiment of the present invention comprises providing a display with level information for each hue of an incoming image signal, receiving the hue adjust value by the user for the image signal, and adjusting a desired hue using the hue adjust value received to correct a color signal of the incoming image signal.

The image signal processing method according to an embodiment of the present invention may further comprise calculating the information on saturation, brightness and hue from the image signal, and correcting the color signal by combining a gain of the received hue adjust value with each gain of the calculated information.

To accomplish the above and/or other aspects, the color signal correction device according to an embodiment of the present invention comprises a saturation gain calculation unit to calculate a saturation gain for incoming luminance_color difference signals, a luminance gain calculation unit to calculate luminance gain for the luminance_color difference signals, a hue calculation unit to calculate a hue for the luminance_color difference signals, a hue gain calculation unit to calculate a hue gain by adjusting the hue calculated by the hue calculation unit using a user adjustable hue adjust value, a correction gain calculation unit to calculate a correction gain of the luminance_color difference signals to be corrected by combining the saturation gain, the luminance gain, and the hue gain, and a color signal correction unit to correct the luminance_color difference signals based on the correction gain calculated by the correction gain calculation unit.

The color signal correction device according to an embodiment of the present invention may further comprise a saturation information calculation unit to calculate the saturation information for the luminance_color difference signals. In this case, the saturation gain calculation unit calculates the saturation gain based on the saturation information calculated by the saturation information calculation unit. Here, the luminance_color difference signals are generally YCbCr signals.

The color signal correction device according to an embodiment of the present invention may further comprise an RGB signal conversion unit to convert the YCbCr signals into RGB signals. In this case, the saturation information calculation unit calculates the saturation information based on the converted RGB signals.

Here, the RGB signal conversion unit converts the YCbCr signals into the RGB signals using the Formula below:

$$\begin{pmatrix} R \\ G \\ B \end{pmatrix} = M \begin{pmatrix} Y \\ Cb \\ Cr \end{pmatrix}$$

wherein, M represents a 3 x 3 transformation matrix.

Also, the saturation information calculation unit calculates the saturation information using the Formula below:

$$S1 = \frac{Max[R,G,B] - Min[R,G,B]}{Max[R,G,B]}$$

$$S2 = \frac{Max[255 - R, 255 - G, 255 - B] - Min[255 - R, 255 - G, 255 - B]}{Max[255 - R, 255 - G, 255 - B]}$$

The saturation gain calculation unit calculates the saturation gain based on the maximum value of the saturation information S1 and S2 calculated by the saturation information calculation unit. Also, the saturation gain calculation unit calculates the saturation gain corresponding to the maximum value, based on a set saturation gain function. Further, the luminance gain calculation unit calculates the luminance gain based on a set luminance gain function.

The hue calculation unit calculates the hue using the Formula below:

$$H = Arc \tan(\frac{Cr}{Cb})$$

wherein H refers to hue, Cb refers to a blue color difference signal, and Cr refers to a red color difference signal.

Also, the hue gain calculation unit calculates the hue gain by using the set hue gain function that is divided into M (Magenta), R (Red), C (Cyan), G (Green), Y (Yellow), and B (Blue) segments and the hue adjust value adjusted by the user.

The hue gain calculation unit calculates the hue gain by summing the gain for each segment in the case where there are overlapping segments in the divided and set hue gain function.

The correction gain calculation unit calculates the correction gain by adjusting gain using the color signal inputted through the external interface. In this case, the color signal correction unit corrects the luminance_color difference signals using the Formula below:

$$\begin{pmatrix} Y* \\ Cb* \\ Cr* \end{pmatrix} = \begin{pmatrix} Y \\ g_c(user, Y, Cb, Cr)Cb \\ g_c(user, Y, Cb, Cr)Cr \end{pmatrix}$$

wherein $g_c$(user) indicates the gain of the color signal inputted through the external interface.

On the other hand, the color signal correction method according to an embodiment of the present invention comprises calculating the saturation gain for incoming luminance_color difference signals, calculating the luminance gain for the luminance_color difference signals, calculating the hue for the luminance_color difference signals, calculating the hue gain by adjusting the hue using a user adjustable hue adjust value, calculating the correction gain of the luminance_color difference signals to be corrected by combining the calculated saturation gain, luminance gain, and hue gain, and correcting the luminance_color difference signals based on the correction gain calculated in the calculating the correction gain.

Additional aspects and/or advantages of the invention will be set forth in part in the description which follows and, in part, will be obvious from the description, or may be learned by practice of the invention.

The color signal correction method according to an embodiment of the present invention may further comprise calculating the saturation information for the luminance_color difference signals. In this case, the calculating the saturation gain includes calculating the saturation gain based on the saturation information calculated in the calculating of the saturation information. Here, the luminance_color difference signals are generally YCbCr signals.

The color signal correction method according to an embodiment of the present invention may further comprise converting the YCbCr signals into RGB signals. In this case, the calculating of the saturation information includes calculating the saturation information based on the converted RGB signals.

In addition, the method of the present invention may be implemented by computer-executable instructions stored on a computer-readable medium.

BRIEF DESCRIPTION OF THE DRAWINGS

These and/or other aspects and advantages of the invention will become apparent and more readily appreciated from the following description of the embodiments, taken in conjunction with the accompanying drawings of which:

The embodiments of the present invention will be explained with reference to the accompanying drawings, in which:

FIG.1 is a schematic block diagram showing an image signal processing system according to an embodiment of the present invention.

FIG. 2 is a flow chart showing an image signal processing method using the system in FIG. 1.

FIG. 3 is a schematic block diagram showing a color signal correction device according to an embodiment of the present invention.

FIG. 4 is a flow chart showing an color signal correction method using the device in FIG. 3.

FIG. 5 illustrates an example of a saturation gain function.

FIG. 6 illustrates an example of a luminance gain function.

FIG. 7 illustrates an example of a hue gain function.

DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

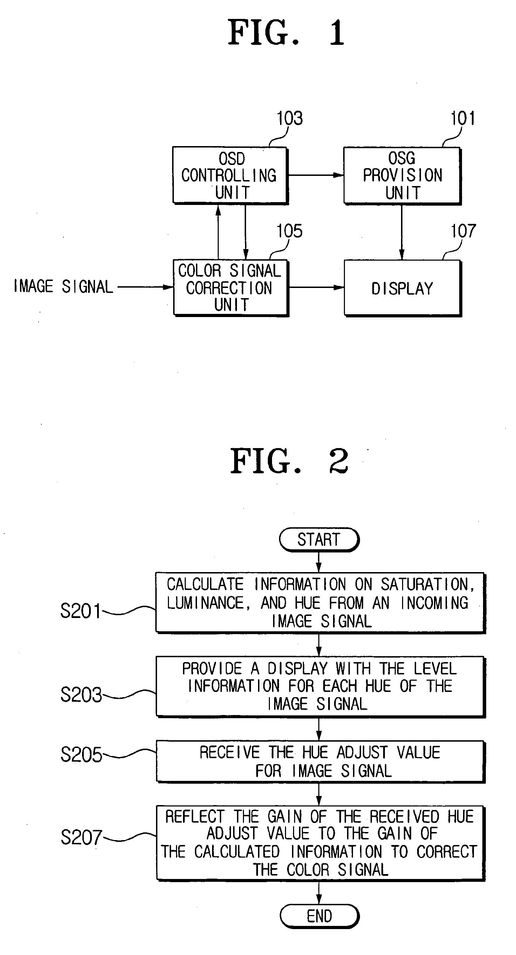

FIG.1 is a schematic block diagram showing an image signal processing system according to an embodiment of the present invention. With reference to FIG.1, the image signal processing system comprises an OSG provision unit 101, an OSD controlling unit 103, and a color signal correction unit 105.

The OSG provision unit 101 provides a display 107 with the OSG (On Screen Graphic) information in the form of characters and/or graphics. The OSD controlling unit 103 supplies the level for each hue of the image signal to the display 107 through the OSG provision unit 101 and receives the hue adjust value that is adjustable by the user for the image signal. In this case, the OSD controlling unit 103 is connected to an input unit (not shown), and is implemented to receive the hue adjust value through the input unit. Also, the level for each hue supplied to the display 107 by the OSD controlling unit 103 is divided into magenta, cyan, yellow, red, green, and blue color segments. However, the divided color segments are not limited to this division, and may be divided into various color segments.

The color signal correction unit 105 adjusts the color signal of the image signal that is inputted using the hue adjust value received through the OSD controlling unit 103, thus correcting the color signal. Here, the color signal correction unit 105 calculates the information on saturation, luminance and hue from the image signal, and corrects the color signal by combining the received hue adjust value with the calculated information.

FIG. 2 is a flow chart showing an image signal processing method using the system in FIG. 1. With reference to FIG. 2, the color signal correction unit 105 calculates the information on saturation, luminance, and hue from the inputted image signal (S201). The color signal correction unit 105 transmits to the OSD controlling unit 103 the level information on each hue among the calculated information. The OSD controlling unit 103 provides the display 107 with the level information on each hue received from the color signal correction unit 105 in the form of characters and/or graphics through the OSG provision unit 101 (S203). The information that is provided to the display 107 by the OSG provision unit 101 is referred to as OSG (On Screen Graphic) information. The user inputs the desired hue adjust value through the OSD controlling unit 103 based on the level information for each hue displayed on the display 107. The OSD controlling unit 103 receives the hue adjust value for the image signal that is inputted by the user (S205). Also, the OSD controlling unit 103 transmits the received hue adjust value to the color signal correction unit 105.

The color signal correction unit 105 corrects the color signal of the incoming image signal by combining the gain of the received hue adjust value with the each gain of the calculated saturation, luminance, and hue (S207). In this way, the image signal processing system processes the input image signal, thus displaying the user desired color image on the display 107. Hereinafter, the configuration and operation on the color signal correction unit 105 will be described in detail.

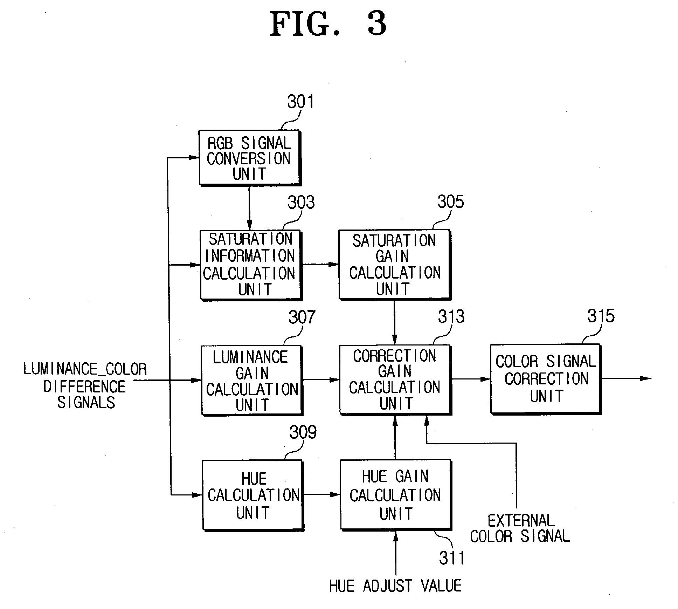

FIG. 3 is a schematic block diagram showing a color signal correction device according to an embodiment of the present invention. With reference to FIG. 3, the color signal correction device comprises an RGB signal conversion unit 301, a saturation information calculation unit 303, a saturation gain calculation unit 305, a luminance gain calculation unit 307, a hue calculation unit 309, a hue gain calculation unit 311, a correction gain calculation unit 313, and a color signal correction unit 315.

The RGB signal conversion unit 301 converts incoming luminance_color difference signals into RGB signals. The saturation information calculation unit 303 calculates the saturation information for the luminance_color difference signals. The saturation gain calculation unit 305 calculates the saturation gain for the luminance_color difference signals. The luminance gain calculation unit 307 calculates the luminance gain for the luminance_color difference signals. The hue calculation unit 309 calculates the hue for the luminance_color difference signals. The hue gain calculation unit 311 calculates the hue gain by reflecting, i.e., adjusting, the hue gain calculated by the hue calculation unit 309 using the hue adjust value that is adjustable by a user . In this case, the hue adjust value is received through the OSD controlling unit 103.

The correction gain calculation unit 313 calculates the correction gain of the luminance_color difference signals by combining the saturation gain calculated by the saturation gain calculation unit 305, the luminance gain calculated by the luminance gain calculation unit 307, and the hue gain calculated the hue gain calculation unit 311.

The color signal correction unit 315 corrects the luminance_color difference signals based on the correction gain calculated by the correction gain calculation unit 313.

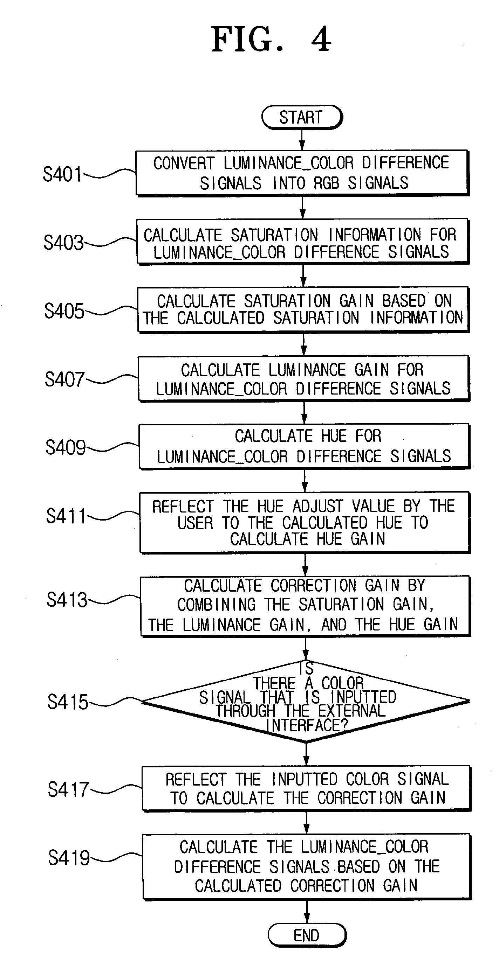

FIG. 4 is a flow chart showing an image signal processing method using the device in FIG. 3. Hereinafter, the functions and operations on the color signal correction device according to an embodiment of the present invention will be described in detail with reference to FIG. 4.

The RGB signal conversion unit 301 converts incoming luminance_color difference signals into RGB signal (S401). Here, the luminance_color difference signals are referred to as any one of a YCbCr signal, a YIQ signal, and a YUV signal. Hereinafter, it will be described that a luminance-color difference signal is assumed to be the YCbCr signal. In this case, the signal conversion method by the RGB signal conversion unit 301 is as follows:

### Formula 1

$$\begin{pmatrix} R \\ G \\ B \end{pmatrix} = M \begin{pmatrix} Y \\ Cb \\ Cr \end{pmatrix}$$

wherein, M refers to a 3 x 3 transformation matrix.

The saturation information calculation unit 303 calculates the saturation information for the YCbCr signal that is inputted based on the converted RGB signal (S403). In this case, the saturation information calculation unit 303 calculates the saturation information using Formula 2 below:

### Formula 2

$$S1 = \frac{Max[R,G,B] - Min[R,G,B]}{Max[R,G,B]}$$

$$S2 = \frac{Max[255 - R, 255 - G, 255 - B] - Min[255 - R, 255 - G, 255 - B]}{Max[255 - R, 255 - G, 255 - B]}$$

wherein S1 and S2 represent the saturation information, respectively. Max [] represents the maximum value among the values within [], and Min [] represents the minimum value among the values within [].

The saturation gain calculation unit 305 calculates the saturation gain for the YCbCr signal based on the saturation information calculated by the saturation information calculation unit 303 (S405). In this case, the saturation gain calculation unit 305 selects the maximum value among the saturation information calculated by the saturation information calculation unit 303 according to the Formula 3 below and calculates the saturation gain based on the selected saturation information.

Formula 3

$$S = Max[S1, S2]$$

However, the Formula to calculate the saturation information may differ in the calculation method according to the type of an incoming image signal (for example, PAL, NTSC, etc.). Also, in the case where the incoming image signal is not an RGB signal, S1 in the Formula 2 may be used as it is if it is an HAV (Hue Saturation Value), and when using the color band look-up table (Gamut Look Up Table), S* may be expressed as a ratio of the maximum Cmax in pixels L*, C*, and H* values. In other words, this expression is as follows:

Formula 4

$$S^* = \frac{C^*}{Cmax(L^*, C^*, H^*)}$$

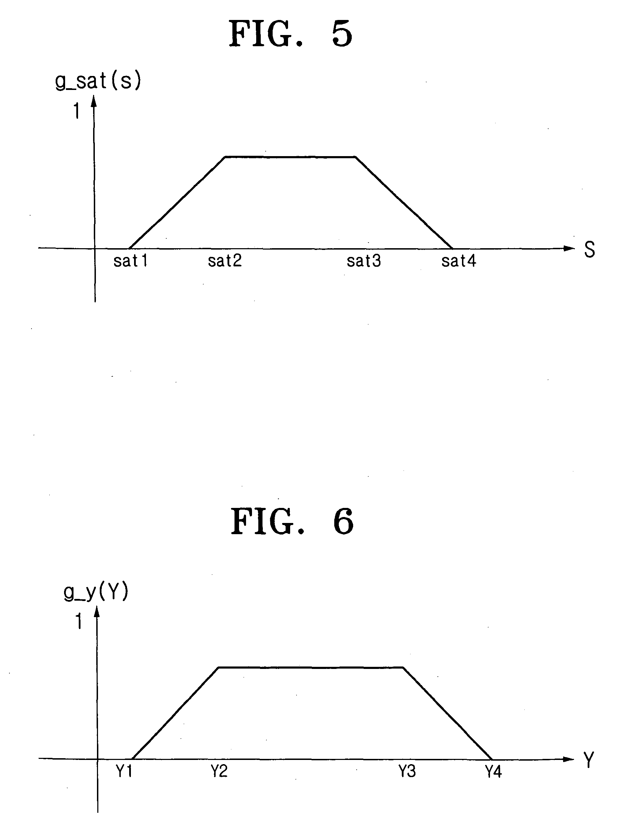

At this time, the saturation gain calculation unit 305 calculates the saturation gain corresponding to the saturation information that is selected based on the set saturation gain function. Here, an example of the saturation gain function is shown in FIG. 5. The respective parameter (sat 1, sat2, sat3, and sat4) of the saturation gain function is optionally adjustable, and it is desirable to set the slopes of sat1~ sat2 and sat3-sat4 intervals thus formed to appropriate parameter values that are not sufficiently high to prevent color contour after correcting the color signal. Here, sat1, sat2, sat3, and sat4 are set to 0.1, 0.4, 0.7, and 1, respectively.

The luminance gain calculation unit 307 calculates the luminance gain based on the set luminance gain function (S407). An example of the luminance gain function is shown in FIG. 6. The luminance gain calculation unit 307 adaptively calculates the luminance gain according to the luminance Y information of the inputted YCbCr signal. Since the luminance distribution of most native images and most chromatic colors mainly exist in a mid-tone region due to the characteristic of YCbCr color space, the gain of the corresponding input luminance is obtained through the set gain function as shown in FIG. 6, and is adaptively used in correcting the color signal. The respective parameter may optionally be set. Here, Y1, Y2, Y3, and Y4 are set to 0, 0.3, 0.8, and 1, respectively.

The hue calculation unit 309 calculates the hue for the inputted YCbCr signal (S409). In other words, the hue calculation unit 309 calculates the hue from the color difference signals Cb, Cr of the pixels of the inputted image signal using the Formula 5 below:

Formula 5

$$H = Arc \tan(\frac{Cr}{Cb})$$

wherein H refers to hue, Cb refers to a blue color difference signal, and Cr refers to a red color difference signal. The hue calculated by the hue calculation unit 309 is transmitted to the hue gain calculation unit 311.

The hue gain calculation unit 311 receives the hue calculated by the hue calculation unit 309. Also, the hue gain calculation unit 311 receives the hue adjust value that is adjustable by the user from the OSD controlling unit 103. The hue gain calculation unit 311 calculates the hue gain by reflecting, i.e., adjusting, the hue gain of the set hue gain function that is divided into M (Magenta), R (Red), C (Cyan), G (Green), Y (Yellow), and B (Blue) segments (S411) using the gain of the hue adjust value adjusted by the user.

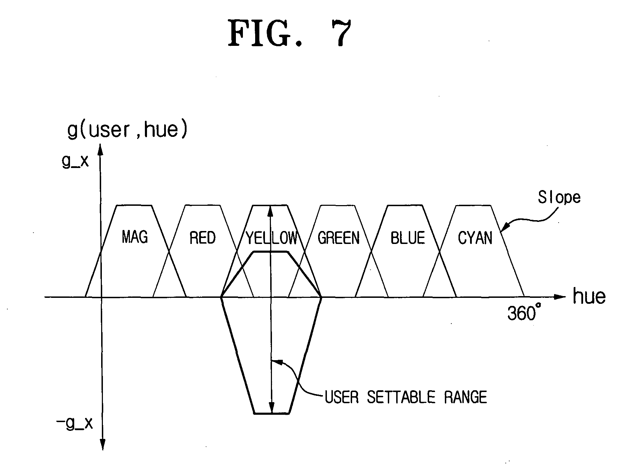

FIG. 7 shows an example of the hue gain function. Each color segment may be divided into at least two or more segments in the trapezoidal form. At this time, it is possible to divide into a variety of color segments depending on the position on the hue axis of the segment division function of the trapezoidal form. Although the six-divided color segments are shown in FIG. 7, it is not limited to these segments. Also, although the hue gain function in the trapezoidal form is shown in FIG. 7, it is not limited to embodiment. For example, the hue gain function may be implemented as functions of various forms (i.e., the function of a triangle form). At this time, the color contour may be prevented from occurring at the boundary between each color segment by setting the slope of the individual gain function used in dividing each segment sufficiently low.

The user may adjust the color between +g_x ~ -g_x for each divided color segment via the OSD controlling unit 103 or another external input interface (not shown). The hue gain calculation unit 311 reflects the hue adjust value that is adjusted by the user to the divided hue gain function, i.e., adjusts the divided hue gain function using the hue adjust value that is adjusted by the user, thus calculating the hue gain. The hue gain calculation unit 311 calculates the total hue gain by summing the gain for each segment in the case where there are overlapping segments in the divided and set hue gain function.

The correction gain calculation unit 313 calculates the correction gain of YCbCr signal to be corrected by combining the saturation gain calculated by the saturation gain calculation unit 305, the luminance gain calculated by the luminance gain calculation unit 307, and the hue gain calculated by the hue gain calculation unit 311 (S413). In this case, the color signal inputted through the external interface is present (S415), and the correction gain calculation unit 313 calculates the correction gain by adjusting the correction gain using the color signal inputted from the external interface (S417). Assuming the gain of the color signal that is externally inputted from the user to be $g_{color}$ (user), the luminance gain to be $g_Y$, the saturation gain to be $g_{sat}$, and the gain of the hue adjust value to be $g_{hue}$, the total correction gain $g_{total}$ may be calculated as follows:

Formula 6

$$g_{total}(\text{user}, Y, Cb, Cr) = g_{total}(user) \cdot (g_y(Y) \cdot g_{sat}(S) \cdot g_{hue}(\text{user}, h) + 1)$$

However, the calculation method of the total correction gain is not limited to the above computation, and may be calculated in various ways. For example, the total correction gain may be calculated using any one of the formulas below:

$$g_{total}(\text{user}, Y, C_b, Cr) = g_{hue}(\text{user}, h) + 1$$

$$g_{total}(\text{user}, Y, C_b, Cr) = g_{sat}(S) \cdot g_{hue}(\text{user}, h) + 1$$

$$g_{total}(\text{user}, Y, C_b, Cr) = g_y(Y) \cdot g_{hue}(\text{user}, h) + 1$$

$$g_{total}(\text{user}, Y, C_b, Cr) = g_{color}(\text{user}) \cdot (g_{hue}(\text{user}, h) + 1)$$

$$g_{total}(\text{user}, Y, C_b, Cr) = g_{color}(\text{user}) \cdot (g_{sat}(S) \cdot g_{hue}(\text{user}, h) + 1)$$

$$g_{total}(\text{user}, Y, C_b, Cr) = g_{color}(\text{user}) \cdot (g_Y(Y) \cdot g_{hue}(\text{user}, h) + 1)$$

The color signal correction unit 315 corrects the YCbCr signal that is inputted based on the correction gain calculated by the correction gain calculation unit 313 (S419). The correction method of the YCbCr signal by the color signal correction unit 315 is as follows:

Formula 7

$$\begin{pmatrix} Y* \\ Cb* \\ Cr* \end{pmatrix} = \begin{pmatrix} Y \\ g_c(user, Y, Cb, Cr)Cb \\ g_c(user, Y, Cb, Cr)Cr \end{pmatrix}$$

In an embodiment, the variation of the luminance signal of the detected color segment may be adjusted by the user luminance gain input $g_{lum}$ (user) for the each individual hue segment through the user interface. In this case, the correction method by the color signal correction unit 315 is as follows:

### Formula 8

$$\begin{pmatrix} Y* \\ Cb* \\ Cr* \end{pmatrix} = \begin{pmatrix} g_{lum}(user)Y \\ Cb \\ Cr \end{pmatrix}$$

In another embodiment, the color signal may be corrected by adjusting the color signal using the saturation and luminance values that are simultaneously adjusted by the user. In this case, the correction method by the color signal correction unit 315 may be computed as follows:

### Formula 9

$$\begin{pmatrix} Y* \\ Cb* \\ Cr* \end{pmatrix} = \begin{pmatrix} g_{lum}(user)Y \\ g_c(user, Y, Cb, Cr)Cb \\ g_c(user, Y, Cb, Cr)Cr \end{pmatrix}$$

Thus, the color signal correction device according to an embodiment of the present invention may perform the adjustment by each segment for the user desired saturation information, thus reproducing the user desired color. Also, it may divide the color segments and perform the adjustment by each hue, thus balancing the color reproducibility.

According to an embodiment of the present invention, the color signal correction device may allow a user to adjust the gain for each hue, and reproduce the user desired color image by reflecting the gain adjusted by the user, i.e., adjusting the gain for each hue using the gain adjusted by the user, and correcting the color signal. Also, it may divide the color segments and perform the adjustment for each hue by the user, thus reproducing the user desired color signal.

Also, the method of the present invention may be implemented by computer-executable instructions stored on a computer-readable medium.

Although a few embodiments of the present invention have been shown and described, it would be appreciated by those skilled in the art that changes may be made in this embodiment without departing from the principles and spirit of the invention, the scope of which is defined in the claims and their equivalents.

**Claims**

1.  An image signal processing system comprising:

    a OSG provision unit to provide a display with information in a form of characters and/or graphics;
    an OSD controlling unit to supply a level for each hue of an image signal to the display through the OSG provision unit and to receive a hue adjust value from a user for the image signal; and
    a color signal correction unit to adjust a hue value of a color signal of the image signal using the hue adjust value received through the OSD controlling unit to correct the color signal.

2.  The system of claim 1, wherein the color signal correction unit calculates information on saturation, luminance and hue from the image signal, and corrects the color signal by combining the received hue adjust value with the calculated information.

3.  An image signal processing method comprising :

    providing a display with level information for each hue of an incoming image signal; receiving a hue adjust value from the user for the image signal; and

adjusting a hue value of a color signal of the incoming image signal using the received hue adjust value to correct the color signal of the incoming image signal.

4. The method of claim 3, further comprising calculating information on saturation, luminance and hue from the image signal, and correcting the color signal by combining a gain of the received hue adjust value with each gain of the calculated information.

5. A color signal correction device comprising:

a saturation gain calculation unit to calculate a saturation gain for incoming luminance_color difference signals;
a luminance gain calculation unit to calculate a luminance gain for the luminance_color difference signals;
a hue calculation unit to calculate a hue for the luminance_color difference signals;
a hue gain calculation unit to calculate a hue gain by adjusting the hue calculated by the hue calculation unit using a user adjustable hue adjust value ;
a correction gain calculation unit to calculate a correction gain of the luminance_color difference signals to be corrected by combining the calculated saturation gain, luminance gain, and hue gain; and
a color signal correction unit to correct the luminance_color difference signals based on the correction gain.

6. The device of claim 5, further comprising a saturation information calculation unit to calculate saturation information for the luminance_color difference signals, and wherein the saturation gain calculation unit calculates the saturation gain based on the saturation information calculated by the saturation information calculation unit.

7. The device of claim 6, wherein the luminance_color difference signals are YCbCr signals.

8. The device of claim 7, further comprising an RGB signal conversion unit to convert the YCbCr signals into RGB signals, and wherein the saturation information calculation unit calculates the saturation information based on the converted RGB signals.

9. The device of claim 8, wherein the RGB signal conversion unit converts the YCbCr signals into the RGB signals using a Formula below:

$$\begin{pmatrix} R \\ G \\ B \end{pmatrix} = M \begin{pmatrix} Y \\ Cb \\ Cr \end{pmatrix}$$

wherein M denotes a 3 x 3 transformation matrix.

10. The device of claim 9, wherein the saturation information calculation unit calculates the saturation information based on a Formula below:

$$S1 = \frac{Max[R,G,B] - Min[R,G,B]}{Max[R,G,B]}$$

$$S2 = \frac{Max[255 - R, 255 - G, 255\ B] - Min[255 - R, 255 - G, 255 - B]}{Max[255 - R, 255 - G, 255 - B]}$$

wherein S1 and S2 denote the saturation information, respectively.

11. The device of claim 10, wherein the saturation gain calculation unit calculates the saturation gain based on a maximum value of the saturation information S1 and S2 calculated by the saturation information calculation unit.

12. The device of claim 11, wherein the saturation gain calculation unit calculates the saturation gain corresponding to a maximum value based on a set saturation gain function.

13. The device of claim 12, wherein the luminance gain calculation unit calculates the luminance gain based on a set luminance gain function.

14. The device of claim 13, wherein the hue calculation unit calculates the hue using a Formula below:

$$H = Arc \tan(\frac{Cr}{Cb})$$

wherein H denotes hue, Cb denotes a blue color difference signal, and Cr denotes a red color difference signal.

15. The device of claim 14, wherein the hue gain calculation unit calculates the hue gain by adjusting a gain of the set hue gain function that is divided into M (Magenta), R (Red), C (Cyan), G (Green), Y (Yellow), and B (Blue) segments using the hue adjust value adjusted by the user.

16. The device of claim 15, wherein the hue gain calculation unit calculates the hue gain by summing a gain for each segment when the divided and set hue gain function includes overlapping segments.

17. The device of claim 16, wherein the correction gain calculation unit calculates the correction gain by adjusting a color signal inputted through an external interface.

18. The device of claim 17, wherein the color signal correction unit corrects the luminance_color difference signals using a Formula below:

$$\begin{pmatrix} Y* \\ Cb* \\ Cr* \end{pmatrix} = \begin{pmatrix} Y \\ g_c(user, Y, Cb, Cr)Cb \\ g_c(user, Y, Cb, Cr)Cr \end{pmatrix}$$

wherein $g_c$(user) denotes the gain of the color signal inputted through the external interface.

19. A color signal correction method comprising :

    calculating a saturation gain for incoming luminance_chrominance signals;
    calculating a luminance gain for the luminance_color difference signals;
    calculating a hue for the luminance_color difference signals;
    calculating a hue gain by adjusting the calculated hue using a user adjustable hue adjust value ;
    calculating a correction gain of the luminance_color difference signals to be corrected by combining the calculated saturation gain, luminance gain, the hue gain; and
    correcting the luminance_color difference signals based on the correction gain .

20. The method of claim 19 further comprising:

    calculating saturation information for the luminance_color difference signals;
    calculating the saturation gain based on the saturation information.

21. The method of claim 20, wherein the luminance_color difference signals are YCbCr signals.

22. The method of claim 21, further comprising converting the YCbCr signals into RGB signals, and calculating the saturation information based on the converted RGB signals.

23. The method of claim 22, wherein the converting to the RGB signals includes converting the YCbCr signals into the RGB signals using a Formula below:
wherein M

$$\begin{pmatrix} R \\ G \\ B \end{pmatrix} = M \begin{pmatrix} Y \\ Cb \\ Cr \end{pmatrix}$$

denotes a 3 x 3 transformation matrix

24. The method of claim 23, wherein the calculating the saturation information includes calculating the saturation information based on Formulas below:

$$S1 = \frac{Max[R,G,B] - Min[R,G,B]}{Max[R,G,B]}$$

$$S2 = \frac{Max[255 - R,255 - G,255 - B] - Min[255 - R,255 - G,255 - B]}{Max[255 - R,255 - G,255 - B]}$$

wherein S1 and S2 denote the saturation information, respectively.

25. The method of claim 24, wherein the calculating the saturation gain includes calculating the saturation gain based on a maximum value of the saturation information S1 and S2 calculated in the calculating of the saturation information.

26. The method of claim 25, wherein the calculating the saturation gain includes calculating the saturation gain corresponding to the maximum value based on a set saturation gain function.

27. The method of claim 26, wherein the calculating the luminance gain includes calculating the luminance gain based on a set luminance gain function.

28. The method of claim 27, wherein the calculating the hue includes calculating the hue using a Formula below:

$$H = Arc \tan(\frac{Cr}{Cb})$$

where H denotes hue, Cb denotes a blue color difference signal, and Cr denotes a red color difference signal.

29. The method of claim 28, wherein the calculating the hue gain includes adjusting a gain of the set hue gain function that is divided into M (Magenta), R (Red), C (Cyan), G (Green), Y (Yellow), and B (Blue) segments using the hue adjust value adjusted by the user.

30. The method of claim 29, wherein the calculating the hue gain includes calculating the hue gain by summing a gain for each segment where the divided and set hue gain function has overlapping segments.

31. The method of claim 30, wherein the calculating the correction gain includes adjusting the correction gain using a color signal inputted through an external interface.

32. The method of claim 31, wherein the correcting the color signal includes correcting the luminance_color difference signals using a Formula below:

$$\begin{pmatrix} Y* \\ Cb* \\ Cr* \end{pmatrix} = \begin{pmatrix} Y \\ g_c(user,Y,Cb,Cr)Cb \\ g_c(user,Y,Cb,Cr)Cr \end{pmatrix}$$

wherein gc(user) denotes the gain of the color signal inputted through the external interface.

# FIG. 1

```
        103                              101
   ┌─────────────┐                 ┌─────────────┐
   │     OSD     │                 │     OSG      │
   │ CONTROLLING │ ──────────────> │  PROVISION   │
   │    UNIT     │                 │     UNIT     │
   └─────────────┘                 └─────────────┘
        ▲  │                             │
        │  │         105                 │      107
        │  ▼    ┌─────────────┐          ▼  ┌─────────────┐
IMAGE SIGNAL ──>│COLOR SIGNAL │ ─────────> │   DISPLAY    │
                │ CORRECTION  │            │              │
                │    UNIT     │            └─────────────┘
                └─────────────┘
```

# FIG. 2

```
                    ┌─────────┐
                    │  START  │
                    └─────────┘
                         │
                         ▼
        ┌──────────────────────────────────────┐
        │ CALCULATE INFORMATION ON SATURATION,  │
  S201 ─┤ LUMINANCE, AND HUE FROM AN INCOMING   │
        │            IMAGE SIGNAL               │
        └──────────────────────────────────────┘
                         │
                         ▼
        ┌──────────────────────────────────────┐
        │  PROVIDE A DISPLAY WITH THE LEVEL     │
  S203 ─┤  INFORMATION FOR EACH HUE OF THE      │
        │            IMAGE SIGNAL               │
        └──────────────────────────────────────┘
                         │
                         ▼
        ┌──────────────────────────────────────┐
  S205 ─┤     RECEIVE THE HUE ADJUST VALUE      │
        │           FOR IMAGE SIGNAL            │
        └──────────────────────────────────────┘
                         │
                         ▼
        ┌──────────────────────────────────────┐
        │ REFLECT THE GAIN OF THE RECEIVED HUE  │
  S207 ─┤    ADJUST VALUE TO THE GAIN OF        │
        │ THE CALCULATED INFORMATION TO CORRECT │
        │            THE COLOR SIGNAL           │
        └──────────────────────────────────────┘
                         │
                         ▼
                    ┌─────────┐
                    │   END   │
                    └─────────┘
```

# FIG. 3

301

RGB SIGNAL
CONVERSION
UNIT

303

SATURATION
INFORMATION
CALCULATION
UNIT

305

SATURATION
GAIN
CALCULATION
UNIT

307

LUMINANCE_COLOR
DIFFERENCE
SIGNALS

LUMINANCE
GAIN
CALCULATION
UNIT

313

CORRECTION
GAIN
CALCULATION
UNIT

315

COLOR SIGNAL
CORRECTION
UNIT

309

HUE
CALCULATION
UNIT

HUE GAIN
CALCULATION
UNIT

EXTERNAL
COLOR SIGNAL

311

HUE ADJUST VALUE

# FIG. 4

START

S401 — CONVERT LUMINANCE_COLOR DIFFERENCE SIGNALS INTO RGB SIGNALS

S403 — CALCULATE SATURATION INFORMATION FOR LUMINANCE_COLOR DIFFERENCE SIGNALS

S405 — CALCULATE SATURATION GAIN BASED ON THE CALCULATED SATURATION INFORMATION

S407 — CALCULATE LUMINANCE GAIN FOR LUMINANCE_COLOR DIFFERENCE SIGNALS

S409 — CALCULATE HUE FOR LUMINANCE_COLOR DIFFERENCE SIGNALS

S411 — REFLECT THE HUE ADJUST VALUE BY THE USER TO THE CALCULATED HUE TO CALCULATE HUE GAIN

S413 — CALCULATE CORRECTION GAIN BY COMBINING THE SATURATION GAIN, THE LUMINANCE GAIN, AND THE HUE GAIN

S415 — IS THERE A COLOR SIGNAL THAT IS INPUTTED THROUGH THE EXTERNAL INTERFACE?

S417 — REFLECT THE INPUTTED COLOR SIGNAL TO CALCULATE THE CORRECTION GAIN

S419 — CALCULATE THE LUMINANCE_COLOR DIFFERENCE SIGNALS BASED ON THE CALCULATED CORRECTION GAIN

END

# FIG. 5

# FIG. 6

# FIG. 7